# EUROPÄISCHE PATENTANMELDUNG

(11) **EP 0 966 148 A2**
(43) Veröffentlichungstag der Anmeldung: **22.12.1999**
(21) Anmeldenummer: 99440123.0
(22) Anmeldetag: 28.05.1999
(51) Int. Cl.: H04M 15/00, H04M 15/30

(54) **Verfahren, Server und Kommunikationsknoten zum Aufbau gebührenoptimierter Kommunikationsverbindungen**

(30) Priorität: 19.06.1998 DE 19827285
(71) Anmelder: ALCATEL, 75008 Paris (FR)
(72) Erfinder: Matt, Hans Jürgen Dr., 71686 Remseck (DE); Sauer, Peter, 71254 Ditzingen (DE); Kotthaus, Rolf, 71642 Ludwigsburg (DE)
(74) Vertreter: Brose, Gerhard, Dipl.-Ing.

(57) **Zusammenfassung**

Die vorliegende Erfindung betrifft ein Verfahren zum Aufbau gebührenoptimierter Kommunikationsverbindungen durch eine Kommunikationseinrichtung (EX1), einen Server zum Aufbau gebührenoptimierter Kommunikationsverbindungen und einen Kommunikationsknoten (EX1) hierfür. Dabei stellt die Kommunikationseinrichtung eine Datenbasis bereit, in der Gebühren gespeichert sind, die bei der Nutzung von Kommunikationswegen (CON2A, CON2B) anfallen, die zum Aufbau einer Kommunikationsverbindung nutzbar sind. Ein erster Teilnehmer (SUB1) meldet dann einen Verbindungswunsch zu einem zweiten Teilnehmer (SUB2) bei der Kommunikationseinrichtung an. Diese ermittelt dann einen Kommunikationsweg (CON2A) zwischen dem ersten und dem zweiten Teilnehmer nach den insgesamt günstigsten Gebühren und baut eine Kommunikationsverbindung zwischen dem ersten und dem zweiten Teilnehmer auf dem besagten Kommunikationsweg auf. Dazu wird vorgeschlagen, daß die Kommunikationseinrichtung die durch die besagte Kommunikationsverbindung anfallenden Gebühren ermittelt und einem der Teilnehmer anrechnet.

## Beschreibung

Die vorliegende Erfindung betrifft ein Verfahren gemäß dem Oberbegriff des Anspruchs 1, einen Server gemäß dem Oberbegriff des Anspruchs 8 und einen Kommunikationsknoten gemäß dem Oberbegriff des Anspruchs 9 hierfür.

Durch die Liberalisierung des Telekommunikationsmarktes kann ein Teilnehmer beim Aufbau einer Kommunikationsverbindung zumeist unter Kommunikationswegen auf unterschiedlichen Telekommunikationsnetzen auswählen, über die die Kommunikationsverbindung zu einem Kommunikationspartner herstellbar ist. Durch die Wahl einer Kennziffer zusätzlich zu der Teilnehmernummer des gewünschten Kommunikationspartners kann ein Kommunikationsweg auf einem der Telekommunikationsnetze bestimmt werden. Die Auswahl eines Kommunikationsweges kann z.B. danach erfolgen, auf welchem Kommunikationsweg die geringsten Gebühren zu erwarten sind, aber auch auf welchem Kommunikationsweg eine gewünschte Übertragungsqualität erzielt werden kann. Da für eine Auswahl eines Kommunikationsweges nach den geringsten Gebühren Kenntnis über die jeweils anfallenden Gebühren erforderlich ist, werden für den privaten Bereich in jüngerer Zeit Geräte angeboten, die zwischen einem Teilnehmeranschluß eines Telekommunikationsnetzes und ein Endgerät eines Teilnehmers geschaltet werden und automatisch eine möglichst kostengünstige Kommunikationsverbindung zu einem Kommunikationspartner herstellen. Dieses Leistungsmerkmal wird "Least Cost Routing" bezeichnet und ist z.B. in manchen privaten Telekommunikationsanlagen und in Anschaltboxen verfügbar, die zwischen Teilnehmeranschluß und Endgerät geschaltet sind. In einem solchen Least-Cost-Routing-Gerät ist eine Gebührentabelle abgelegt, aus der das Gerät zum Aufbau möglichst kostengünstiger Kommunikationsverbindungen die jeweils anfallenden Gebühren und die jeweils zu wählenden Kennziffern von unterschiedlichen Kommunikationswegen entnehmen kann. Wenn der Teilnehmer an seinem Endgerät eine Teilnehmernummer eines gewünschten Kommunikationspartners angibt, so überträgt das Endgerät diese Teilnehmernummer zunächst an das Least-Cost-Routing-Gerät, das dann anhand seiner Gebührentabelle einen möglichst kostengünstigen Kommunikationsweg ermittelt. Anschließend baut das Least-Cost-Routing-Gerät die gewünschte Kommunikationsverbindung auf, indem es einen Verbindungswunsch mit der Kennziffer des ermittelten kostengünstigsten Kommunikationsweges und die Teilnehmernummer des gewünschten Kommunikationspartners an den Teilnehmeranschluß versendet.

Im allgemeinen verfügt jedoch bei weitem nicht jeder Teilnehmer über ein Least-Cost-Routing-Gerät, so daß ein solcher Teilnehmer nur dann in den Genuß möglichst kostengünstiger Kommunikationsverbindungen kommt, wenn er die Tarife möglicher Kommunikationswege und deren jeweilige Kennziffer kennt, den kostengünstigsten Kommunikationsweges selbst ermittelt und anschließend dessen Kennziffer in sein Endgerät eingibt. Auch der Besitzer eines Least-Cost-Routing-Gerätes muß einige Unbequemlichkeiten in Kauf nehmen, da die Tarife möglicher Kommunikationswege von deren Anbietern häufig geändert werden und deshalb die in dem Least-Cost-Routing-Gerät abgelegte Tabelle bei jeder Tarifänderung auf den neuesten Stand gebracht werden muß. Der Besitzer muß sich dann über die aktuellen Tarife informieren und diese Tarife in das Least-Cost-Routing-Gerät eingeben.

Aufgabe der Erfindung ist es, auf einfache und bequeme Weise Kommunikationsverbindungen zu möglichst geringen Gebühren aufzubauen.

Diese Aufgabe wird durch ein Verfahren gemäß der technischen Lehre des Anspruchs 1, einen Server gemäß der technischen Lehre des Anspruchs 8 und einen Kommunikationsknoten gemäß der technischen Lehre des Anspruchs 9 gelöst. Weitere vorteilhafte Ausgestaltungen der Erfindung sind den abhängigen Ansprüchen und der Beschreibung zu entnehmen.

Im folgenden werden die Erfindung und ihre Vorteile anhand eines Ausführungsbeispiels unter Zuhilfenahme der Zeichnungen dargestellt.
- Figur 1: zeigt eine Anordnung zur Ausführung des erfindungsgemäßen Verfahrens aus einem Endgerät SUB1, einem Endgerät SUB2, einem erfindungsgemäßen Kommunikationsknoten EX1 und einem Kommunikationsknoten EX2.
- Figur 2: zeigt einen erfindungsgemäßen Kommunikationsknoten EX1, der ein Steuermittel CPU, einen Speicher MEM und eine Umschalteinrichtung SW enthält.
- Figur 3: zeigt eine Anordnung zur Ausführung des erfindungsgemäßen Verfahrens aus einem Endgerät SUB1, einem Endgerät SUB2, einem Endgerät SUB2B, einem erfindungsgemäßen Kommunikationsknoten EX1 und einem Kommunikationsknoten EX2.
- Figur 4: zeigt eine Anordnung zur Ausführung des erfindungsgemäßen Verfahrens aus einem Endgerät SUB1, einem Endgerät SUB2, einem Kommunikationsknoten EXX, einem erfindungsgemäßen Server SER und einem Kommunikationsknoten EX2.

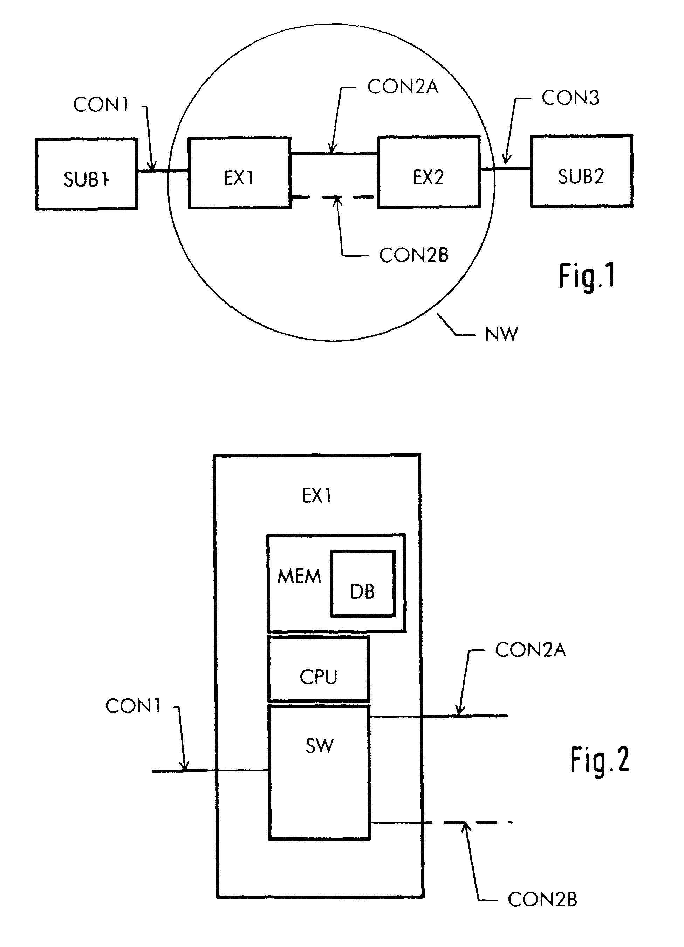

In Figur 1 ist eine Anordnung dargestellt, mit der das erfindungsgemäße Verfahren ausgeführt werden kann. Ausgehend von einem Endgerät SUB1 eines ersten Teilnehmers soll eine Verbindung zu einem Endgerät SUB2 eines zweiten Teilnehmers zu möglichst geringen Gebühren aufgebaut werden. Sowohl das Endgerät SUB1 als auch das Endgerät SUB2 sind an ein Telekommunikationsnetz NW über jeweils in Figur 1 nicht dargestellte Teilnehmeranschlußleitungen angeschlossen. Dargestellt sind jedoch ein später näher erläuterter Verbindungsabschnitt CON1, der über die Teilnehmeranschlußleitung zu dem Endgerät SUB1 läuft, und ein ebenfalls später näher erläuterter Verbindungsabschniff CON3, der über die Teilnehmeranschlußleitung zu dem Endgerät SUB2 führt. Beiden Teilnehmeranschlußleitungen ist jeweils eine Teilnehmernummer zugeordnet. Zur Vereinfachung der Darstellung wird im folgenden die dem Teilnehmeranschluß des Endgerätes SUB1 zugeordnete Teilnehmernummer als "Teilnehmernummer des Endgerätes SUB1", die dem Teilnehmeranschluß des Endgerätes SUB2 zugeordnete Teilnehmernummer als "Teilnehmernummer des Endgerätes SUB2" bezeichnet. Die Endgeräte SUB1 und SUB2 können z.B. Telefonapparate, Faxgeräte oder Personal Computer mit Anschlußeinrichtungen für ein Telekommunikationsnetz sein. Das Telekommunikationsnetz NW weist exemplarisch für weitere, in Figur 1 nicht dargestellte Elemente einen Kommunikationsknoten EX1 und einen Kommunikationsknoten EX2 auf. Die Kommunikationsknoten EX1 und EX2 können über zwei alternativ nutzbare, später noch näher beschriebene Kommunikationswege CON2A oder CON2B miteinander verbunden werden. Die Kommunikationswege CON2A oder CON2B können über verschiedene in Figur 1 nicht dargestellte Einrichtungen, Verbindungsleitungen und Teilnetze des Telekommunikationsnetzes NW führen, da das Telekommunikationsnetz NW z.B. aus einem Telekommunikationsnetz eines öffentlichen Netzbetreibers, aus Mietleitungen und aus Telekommunikationsnetzen privater Netzbetreiber gebildet sein kann, die als leitungsgebundene Telekommunikationsnetze oder als Mobilfunk-Telekommunikationsnetz ausgeführt sein können. Zwischen den Endgeräten SUB1 und SUB2 ist eine Kommunikationsverbindung herstellbar, die über den Verbindungsabschnitt CON1, den Kommunikationsknoten EX1, den Kommunikationsweg CON2A oder den Kommunikationsweg CON2B zu dem Kommunikationsknoten EX2 und von dort über den Verbindungsabschnitt CON3 führt. Diese Kommunikationsverbindung ist in Figur 1 nicht dargestellt. Da die Kommunikationsverbindung jedoch über die genannten Verbindungsabschnitte führt, die alle jeweils ein Kürzel "CON" in ihrem Bezugszeichen haben, wird diese Kommunikationsverbindung im folgenden zur Vereinfachung als "Kommunikationsverbindung CON" bezeichnet.

Wenn eine Kommunikationsverbindung zwischen dem Endgerät SUB1 zu dem Endgerät SUB2 hergestellt werden soll, so wird zunächst eine Verbindung von dem Endgerät SUB1 zu einem Kommunikationsknoten EX1 auf dem Verbindungsabschnitt CON1 aufgebaut. Dazu wird an dem Endgerät SUB1 sowohl die Teilnehmernummer des Endgerätes SUB2 als auch ein dieser Teilnehmernummer als Vorwahl vorangestellter Identifikator des Kommunikationsknotens EX1 angegeben. Mit Hilfe der Vorwahl kann das Telekommunikationsnetz NW zunächst den Verbindungsabschnitt CON1 zu dem Kommunikationsknoten EX1 aufbauen und zwar ausgehend von dem Teilnehmeranschluß des Endgerätes SUB1 über in Figur 1 nicht dargestellte Einrichtungen und Verbindungsleitungen des Telekommunikationsnetzes NW, z.B. über eine Vorfeldeinrichtung, eine Ortsvermittlungsstelle und eventuell weitere Vermittlungsstellen bis zu dem Kommunikationsknoten EX1. Um die gewünschte Kommunikationsverbindung CON von dem Endgerät SUB1 zu dem Endgerät SUB2 bei dem Kommunikationsknoten EX1 anzumelden, wird dem Kommunikationsknoten EX1 als Verbindungsziel die Teilnehmernummer des Endgerätes SUB2 und zusätzlich als Verbindungsquelle die Teilnehmernummer des Endgerätes SUB1 mitgeteilt, z.B. mit Hilfe einer Signalisierungsnachricht aus dem Zentralen Zeichengabesatz Nr. 7 der ITU-T oder, falls der Verbindungsabschnitt CON1 auf einer Leitung eines ISDN-Telekommunikationsnetzes unterhalten wird, mit Hilfe einer Nachricht auf dem D-Kanal dieser Leitung.

Wie aus Figur 1 ersichtlich, kann die gewünschte Kommunikationsverbindung CON von dem Kommunikationsknoten EX1 aus über die alternativ nutzbaren Kommunikationswege CON2A und CON2B zu dem Kommunikationsknoten EX2 und von dort zu dem Endgerät SUB2 aufgebaut werden. Der Kommunikationsweg CON2A kann z.B. über ein leitungsgebundenes Telekommunikationsnetz führen, der Kommunikationsweg CON2B über ein Mobilfunk-Telekommunikationsnetz oder über ein DECT-Telekommunikationsnetz (Digital European Cordless Telecommunication). Die Einrichtungen dieser Telekommunikationsnetze, z.B. Vermittlungsstellen und Verbindungsleitungen sind aus Gründen der einfachen Darstellung in Figur 1 nicht dargestellt. Es ist aber auch möglich, daß zwischen dem Kommunikationsknoten EX1 und dem Kommunikationsknoten EX2 eine direkte Verbindung besteht, z.B. eine Sammelleitung für mehrere Kommunikationsverbindungen, über die auch der Kommunikationsweg CON2A führen kann. Neben den beiden Kommunikationswegen CON2A und CON2B können zwischen den Kommunikationsknoten EX1 und EX2 auch weitere alternativ nutzbare, in Figur 1 nicht dargestellte Kommunikationswege bestehen.

Um auf die Funktionsweise des Kommunikationsknotens EX1 näher eingehen zu können, werden im folgenden anhand von Figur 2 wesentliche Komponenten des Kommunikationsknotens EX1, nämlich eine Umschalteinrichtung SW, ein Steuermittel CPU und ein Speicher MEM erklärt. In den Kommunikationsknoten EX1 mündet der aus Figur 1 bekannte Verbindungsabschnitt CON1, der innerhalb des Kommunikationsknotens EX1 bis hin zu der Umschalteinrichtung SW geführt ist. Von der Umschalteinrichtung SW kann eine Verbindung von dem Verbindungsabschnitt CON1 zu dem Kommunikationsweg CON2A oder zu dem Kommunikationsweg CON2B hergestellt werden, die beide aus dem Kommunikationsknoten EX1 herausführen und ebenfalls aus Figur 1 bekannt sind. Die Umschalteinrichtung SW kann z.B. ein Koppelfeld einer Vermittlungsstelle sein, das von dem Steuermittel CPU gesteuert wird. Das Steuermittel CPU kann z.B. ein Prozessor sein, der Programme ausführt, die in dem Speicher MEM gespeichert sind. In dem Speicher MEM sind außerdem Kommunikationswegtabellen in einer Datenbasis DB, z.B. einer Datenbank, abgelegt, in denen von dem Kommunikationsknoten EX1 nutzbare Kommunikationswege und für deren Benutzung jeweils anfallende Gebühren vermerkt sind. Das Steuermittel CPU, der Speicher MEM und die Umschalteinrichtung SW sind über in Figur 2 nicht dargestellte Verbindungen jeweils miteinander verbunden.

Die in der Datenbasis DB abgelegten Kommunikationswegtabellen werden von dem Kommunikationsknoten EX1 in regelmäßigen Abständen auf den neuesten Stand gebracht, z.B. indem der Kommunikationsknoten EX1 bei den Betreibern der Kommunikationswege CON2A und CON2B die jeweils gültigen Gebührentarife abfragt oder indem der Kommunikationsknoten EX1 bei von ihm aufgebauten Kommunikationsverbindungen die dabei jeweils anfallenden Gebühren zu einer Ermittlung des Gebührentarifes auf der Kommunikationsverbindung auswertet.

Unter Bezugnahme der in Figur 2 gezeigten Komponenten des Kommunikationsknotens EX1 - der Umschalteinrichtung SW, dem Steuermittel CPU und dem Speicher MEM - wird im folgenden anhand von Figur 1 die Weiterbearbeitung des Verbindungswunsches von dem Endgerät SUB1 zu dem Endgerät SUB2 beschrieben. Nachdem der Kommunikationsknoten EX1 den Verbindungswunsch von dem Endgerät SUB1 zu dem Endgerät SUB2 erhalten hat, stellt der Kommunikationsknoten EX1 fest, auf welchen Kommunikationswegen das Endgerät SUB2 erreichbar ist. Dazu wertet das Steuermittel CPU die in der Datenbasis DB abgelegten Kommunikationswegtabellen aus und stellt zunächst fest, daß das Endgerät SUB2 über die beiden alternativ nutzbaren Kommunikationswege CON2A und CON2B, den Kommunikationsknoten EX2 und den Verbindungsabschnitt CON3 erreicht werden kann. Dann untersucht das Steuermittel CPU mit Hilfe der Kommunikationswegtabellen, auf welchem der beiden Kommunikationswege CON2A und CON2B das Endgerät SUB2 zu den insgesamt günstigsten Gebühren erreicht werden kann. Das Steuermittel CPU kann z.B. den Kommunikationsweg CON2A als den günstigsten Kommunikationsweg ermitteln, weil beim Eingang des Verbindungswunsches der Gebührentarif auf dem Kommunikationsweg CON2A niedriger ist als auf dem Kommunikationsweg CON2B. Über die Betrachtung der Gebührentarife auf den Kommunikationswegen CON2A und CON2B hinaus bezieht der Kommunikationsknoten EX1 auch die auf den Verbindungsabschnitten CON1 und CON3 anfallenden Gebühren in die Ermittlung des jeweils günstigsten Kommunikationsweges mit ein. Falls z.B. das Endgerät SUB1 ein Endgerät für ein leitungsgebundenes Telekommunikationsnetz ist, das Endgerät SUB2 ein Endgerät für ein Mobilfunk-Telekommunikationsnetz und der Kommunikationsweg CON2B sowie der Verbindungsabschnitt CON3 Teile dieses Mobilfunk-Telekommunikationsnetzes sind, kann z.B. der Kommunikationsweg CON2B als Teil einer Kommunikationsverbindung CON zu den insgesamt günstigsten Gebühren für den weiteren Verbindungsaufbau von dem Kommunikationsknoten EX1 ausgewählt werden, da gerade beim Übergang von einem leitungsgebundenen Telekommunikationsnetz in ein Mobilfunk-Telekommunikationsnetz besonders hohe Gebühren für den Netzübergang verlangt werden. Einen solchen Netzübergang ermöglicht der Kommunikationsknoten EX1 mit seiner Schnittstelle zu dem leitungsgebundenen Telekommunikationsnetz, zu dem Verbindungsabschnitt CON1 hin, und mit seiner Schnittstelle zu dem Mobilfunk-Telekommunikationsnetz, zu dem Kommunikationsweg CON2B hin. Der Kommunikationsknoten EX1 kann so zu besonders günstigen Gebühren die Kommunikationsverbindung CON herstellen. Vergleichbar mit dem Netzübergang zu dem Mobilfunk-Telekommunikationsnetz kann der Kommunikationsknoten EX1 dem Endgerät SUB1 auch einen bequemen Zugang zu der genannten Sammelleitung verschaffen, falls die Kommunikationsverbindung CON über diese Sammelleitung zu den insgesamt günstigsten Gebühren möglich ist, da üblicherweise von einem Endgerät aus eine solche Sammelleitung nicht in bequemer Weise direkt ausgewählt und in eine Kommunikationsverbindung einbezogen werden kann.

Zur Ermittlung der insgesamt günstigsten Gebühren für die Kommunikationsverbindung CON kann auch in dem Speicher MEM des Kommunikationsknotens EX1 eine Tabelle abgelegt sein, in der eine durchschnittliche Dauer von Verbindungen vermerkt ist, die von dem Endgerät SUB1 ausgehen. Dann kann das Steuermittel CPU mit Hilfe der Kommunikationswegtabelle berechnen, welche Gebühren während einer solchen durchschnittlichen Verbindung anfallen und damit den günstigsten Kommunikationsweg CON2A oder CON2B auswählen. Die Betrachtung der durchschnittlichen Dauer einer Verbindung ist z.B. dann vorteilhaft, wenn für unterschiedlich lange Verbindungsdauern auf einem Kommunikationsweg besondere Gebührenrabatte gewährt werden oder wenn sich während der Benutzung eines Kommunikationsweges ab einem bestimmten Zeitpunkt dessen anfallende Gebühren ändern. Ebenso ist es auch möglich, daß der Kommunikationsknoten EX1 zur Berechnung voraussichtlich anfallender Gebühren nicht auf Durchschnittswerte von Verbindungsdauern zurückgreift sondern bei dem Endgerät SUB1 eine voraussichtliche Verbindungsdauer anfragt. Dazu sendet der Kommunikationsknoten EX1 nach dem Empfang des Verbindungswunsches für die Kommunikationsverbindung CON z.B. eine Sprachansage mit einer solchen Anfrage auf dem Verbindungsabschnitt CON1 an das Endgerät SUB1. Von dem Endgerät SUB1 kann dann die voraussichtliche Verbindungsdauer z.B. mit Hilfe von DTMF-Signalen (DTMF = Dual Tone Multi Frequency) als eine In-Band-Signalisierung dem Kommunikationsknoten EX1 angezeigt werden.

Im Ausführungsbeispiel bezieht der Kommunikationsknoten EX1 den Kommunikationsweg CON2A in die gewünschte Kommunikationsverbindung CON zu dem Endgerät SUB2 ein, weil das Steuermittel CPU den Kommunikationsweg CON2A als den Kommunikationsweg für eine Kommunikationsverbindung CON mit den günstigsten Gebühren ermittelt hat. Deshalb ist in Figur 1 der Kommunikationsweg CON2A in einer durchgezogenen Linie, der Kommunikationsweg CON2B in einer gestrichelten Linie dargestellt.

Wenn der Kommunikationsweg CON2A Teil einer direkten Sammelleitung zwischen dem Kommunikationsknoten EX1 und dem Kommunikationsknoten EX2 ist, kann der Kommunikationsknoten EX1 zum weiteren Aufbau der gewünschten Kommunikationsverbindung CON einen Kanal dieser Sammelleitung von seiner Seite aus belegen. Dann sendet der Kommunikationsknoten EX1 auf diesem Kanal einen Auftrag an den Kommunikationsknoten EX2, die Verbindung bis hin zu dem Endgerät SUB2 vollständig herzustellen. Der Kommunikationsknoten EX2 baut dann den Verbindungsabschnitt CON3 zu dem Endgerät SUB2 auf, so daß das Endgerät SUB1 und das Endgerät SUB2 miteinander verbunden sind. Wenn der Kommunikationsweg CON2A über ein Teil netz des Telekommunikationsnetzes NW führt, fügt der Kommunikationsknoten EX1 z.B. eine Kennziffer zu der Teilnehmernummer des Endgerätes SUB2 hinzu und teilt dem Telekommunikationsnetz NW die Kennziffer zusammen mit der Teilnehmernummer zum weiteren Aufbau der gewünschten Kommunikationsverbindung CON mit, z.B. über den bereits erwähnten Zentralen Zeichengabesatz Nr. 7. Das Telekommunikationsnetz NW baut dann die Kommunikationsverbindung CON zwischen Endgerät SUB1 und Endgerät SUB2 über den Kommunikationsweg CON2A, den Kommunikationsknoten EX2 und den Verbindungsabschnitt CON3 vollends auf. Führt der Kommunikationsweg CON2A über mehrere Teil netze des Telekommunikationsnetz NW, so gibt der Kommunikationsknoten EX1 dem Telekommunikationsnetz NW zusammen mit der Teilnehmernummer des Endgerätes SUB2 Kennungen für jedes der Teilnetze an, anhand derer das Telekommunikationsnetz NW den Kommunikationsweg CON2A über diese Teil netze aufbauen kann.

Nachdem die Kommunikationsverbindung CON zwischen Endgerät SUB1 und Endgerät SUB2 aufgebaut ist und von den Endgeräten SUB1 und SUB2 anschließend benutzt wird, ermittelt der Kommunikationsknoten EX1 die durch die Benutzung der Kommunikationsverbindung CON anfallenden Gebühren, also die Gebühren auf den Verbindungsabschnitten CON1 und CON3 sowie auf dem Kommunikationsweg CON2A. Dazu sendet z.B. das oben erwähnte Teil netz des Telekommunikationsnetzes NW, über das der Kommunikationsweg CON2A in dem obigen Beispiel führt, dem Kommunikationsknoten EX1 Gebührenimpulse, die das Steuermittel CPU des Kommunikationsknotens EX1 aufsummieren und einem der Teilnehmer der Kommunikationsverbindung CON durch einen Eintrag in dem Speicher MEM anrechnen kann, üblicherweise dem mit dem Endgerät SUB1 anrufenden Teilnehmer. Die Gebührenimpulse kann das Steuermittel CPU jedoch auch dem über das Endgerät SUB2 angerufenen Teilnehmer komplett anrechnen oder jeweils anteilig dem mit dem Endgerät SUB1 anrufenden Teilnehmer und dem über das Endgerät SUB2 angerufenen Teilnehmer. Der Speicher MEM kann zur Abrechnung der angefallenen Gebühren später ausgelesen werden.

Es ist aber auch möglich, daß der Kommunikationsknoten EX1 unmittelbar nach Abbau einer Kommunikationsverbindung CON die durch die Kommunikationsverbindung CON angefallenen und durch den Kommunikationsknoten EX1 ermittelten Gebühren einer in Figur 1 nicht dargestellten Berechnungseinheit des Telekommunikationsnetzes NW zusendet. Neben den von dem Kommunikationsknoten EX1 ermittelten Gebühren kann eine solche Berechnungseinheit z.B. außer den von dem Kommunikationsknoten EX1 erfaßten Gebühren auch von anderen Einrichtungen des Telekommunikationsnetzes NW erfaßte Gebühren speichern, damit später eine Rechnung über alle iiinerhalb des Telekommunikationsnetzes NW angefallenen Gebühren erstellt werden kann.

Die Dienste des Kommunikationsknoten EX1 können den Teilnehmern des Kommunikationsknoten EX1 als besondere Dienstleistung kostenfrei zur Verfügung gestellt werden. Es ist aber auch möglich, daß für die Nutzung des Kommunikationsknotens EX1 eine Gebühr berechnet wird. Der Kommunikationsknoten EX1 kann zusätzlich zu den durch die Nutzung der Kommunikationsverbindung CON angefallenen Gebühren dem Teilnehmer des Endgerätes SUB1 z.B. eine Bearbeitungsgebühr für die Ermittlung des Kommunikationsweges nach den insgesamt günstigsten Gebühren berechnen. Eine solche Bearbeitungsgebühr kann eine pauschale Gebühr sein oder eine variable Gebühr, die sich z.B. aus einer Gebührenersparnis ergibt, die der Kommunikationsknoten EX1 durch die Auswahl des jeweils günstigsten Kommunikationsweges erzielt hat.

Wenn die Dauer der Kommunikationsverbindung CON eine geplante oder aus Durchschnittswerten gebildete Dauer überschreitet, können die für die Kommunikationsverbindung CON tatsächlich anfallenden Gebühren die vorausberechneten Gebühren überschreiten, z.B. weil auf dem Kommunikationsweg CON2A ab einem bestimmten Zeitpunkt ein höherer Gebührensatz gilt. Oder es kann ab einem bestimmten Zeitpunkt der Gebührensatz auf dem Kommunikationsweg CON2B unter dem auf dem Kommunikationsweg CON2A gültigen Gebührensatz liegen. Anhand seiner Kommunikationswegtabelle kann der Kommunikationsknoten EX1 eine solche Änderung der Gebühren ermitteln und z.B. für statistische Zwecke in seinem Speicher MEM vermerken. Vorteilhaft ist es jedoch, wenn eine solche Änderung der Gebühren den Teilnehmern der Kommunikationsverbindung CON angezeigt wird. Zumindest derjenige der Teilnehmer, dem die für die Kommunikationsverbindung CON anfallenden Gebühren berechnet wird, wird sich für eine Änderung der Gebühren interessieren. Wenn die Gebühren z.B. dem Teilnehmer an dem Endgerät SUB1 berechnet werden, kann der Kommunikationsknoten EX1 auf dem Verbindungsabschnitt CON1 an das Endgerät SUB1 eine Nachricht mit den aktuell gültigen Gebühren oder mit einem Hinweis auf eine kostengünstigere Verbindungsmöglichkeit senden, z.B. mit Hilfe einer Sprachansage oder eines Signaltones. Ist der Verbindungsabschnitt CON1 Teil eines ISDN-Telekommunikationsnetzes, kann eine solche Nachricht auch im Rahmen einer User-to-User-Signalisierung auf einem ISDN-D-Kanal befördert werden, wie sie das DSS1-Protokoll für ISDN-Telekommunikationsnetze als Leistungsmerkmal ,,kundenspezifische Zeichengabeinformation während einer Verbindung" unter der Abkürzung "UUS3" anbietet. Den Inhalt einer solchen UUS3-Nachricht kann das Endgerät SUB1 z.B. auf einem Display anzeigen.

Als Reaktion auf den Erhalt einer solchen Nachricht kann der Teilnehmer an dem Endgerät SUB1 z.B. die Kommunikationsverbindung CON beenden, falls sich die Gebühren erhöht haben und der Teilnehmer diese höheren Gebühren nicht berechnet haben will. Der Teilnehmer kann auch nach Beenden der Kommunikationsverbindung CON eine neue Kommunikationsverbindung zu dem Endgerät SUB2 herstellen lassen, indem er den Kommunikationsknoten EX1 erneut damit beauftragt, eine Kommunikationsverbindung zu möglichst günstigen Gebühren aufzubauen. Der Kommunikationsknoten EX1 kann dann z.B. den alternativ nutzbaren Kommunikationsweg CON2B in die neue Kommunikationsverbindung einbeziehen.

Es ist aber auch möglich, daß die Kommunikationsverbindung CON gar nicht erst beendet werden muß, damit jeweils derjenige der Kommunikationswege CON2A oder CON2B für die Kommunikationsverbindung CON genutzt wird, der die Kommunikationsverbindung CON zu den jeweils günstigsten Gebühren ermöglicht. Nachdem der Kommunikationsknoten EX1 einen alternativ nutzbaren Kommunikationsweg ermittelt hat, z.B. den Kommunikationsweg CON2B, kann der Kommunikationsknoten EX1 zwischen den Kommunikationswegen CON2A und CON2B während des Bestehens der Kommunikationsverbindung CON umschalten, z.B. indem er für eine Übergangsphase beide Kommunikationswege CON2A und CON2B parallel belegt und dann nahtlos von einem Kommunikationsweg auf den anderen umschaltet. Eine solche Umschaltung kann der Kommunikationsknoten EX1 auch automatisch vornehmen, wenn dies so vorherbestimmt ist, z.B. durch einen entsprechenden Eintrag für das Endgerät SUB1 in dem Speicher MEM.

Eine automatische Umschaltung kann jedoch im einen oder anderen Fall von einem Teilnehmer nicht gewünscht sein, z.B. weil beim Umschalten die Kommunikationsverbindung CON kurzzeitig unterbrochen oder gestört sein könnte oder weil die Kommunikationsverbindung CON ohnehin schon kurz nach Erkennen der Umschaltmöglichkeit beendet werden sollte. Der Kommunikationsknoten EX1 hat dann z.B. einen Vermerk in seinem Speicher MEM, daß erst nach Erhalt eines Auftrages zwischen Kommunikationswegen umgeschaltet werden darf. Ein solcher Auftrag kann von einem der Endgeräte SUB1 oder SUB2 dem Kommunikationsknoten EX1 als eine Auftragsnachricht in Form einer Zeichengabe gesendet werden, mit der dem Kommunikationsknoten EX1 ein Auftrag zum Umschalten gegeben wird. Die Auftragsnachricht kann z.B. mit Hilfe der erwähnten In-Band-Signalisierung mit DTMF-Signalen an den Kommunikationsknoten EX1 gesendet werden.

Eine weitere Möglichkeit ergibt sich, wenn der Kommunikationsknoten EX1 bei einem von dem Endgerät SUB1 ausgehenden Verbindungswunsch zu dem Endgerät SUB2 ermittelt, daß die gewünschte Kommunikationsverbindung CON zu dem Endgerät SUB2 dann besonders günstig hergestellt werden kann, wenn die Kommunikationsverbindung CON zwischen Endgerät SUB1 und Endgerät SUB2 nicht von dem Kommunikationsknoten EX1, sondern von dem Kommunikationsknoten EX2 in Form einer sogenannten "Callback"-Funktion ausgehend aufgebaut wird. Der Kommunikationsknoten EX1 sendet dann zunächst dem Kommunikationsknoten EX2 eine Nachricht mit einem Auftrag, die Kommunikationsverbindung CON aufzubauen und gibt dabei auch an, auf welchem der Kommunikationswege CON2A oder CON2B dies am günstigsten möglich ist. Dann beendet der Kommunikationsknoten EX1 die Verbindung mit dem Endgerät SUB1 auf der Kommunikationsverbindung CON1. Daraufhin baut der Kommunikationsknoten EX2 die gewünschte Kommunikationsverbindung CON zwischen Endgerät SUB2 und Endgerät SUB1 weisungsgemäß auf einem der Kommunikationswege CON2A oder CON2B auf. Wenn die durch die Kommunikationsverbindung CON anfallenden Gebühreneinheiten dem Kommunikationsknoten EX1 übermittelt werden, kann auch in diesem Fall der Kommunikationsknoten EX1 die Gebühreneinheiten ermitteln und die Gebühren einem der beiden Teilnehmer anrechnen.

In einer besonders einfachen, aber effizienten Ausgestaltung der Erfindung, ist es zur Ausführung der obengenannten ,,Callback"-Funktion nicht einmal erforderlich, daß zwischen dem Kommunikationsknoten EX1 und dem Kommunikationsknoten EX2 zwei alternative Kommunikationswege CON2A und CON2B vorhanden sind, sondern möglicherweise nur ein Kommunikationsweg, z.B. der Kommunikationsweg CON2A. Der Kommunikationsknoten EX1 kann in einem solchen Fall zunächst ermitteln, daß die gewünschte Kommunikationsverbindung CON auf dem Kommunikationsweg CON2A prinzipiell herstellbar ist und dann feststellen, daß der Kommunikationsweg CON2A dann zu den insgesamt günstigsten Gebühren nutzbar ist, wenn er von dem Kommunikationsknoten EX2 ausgehend angesprochen wird. Der Kommunikationsknoten EX1 sendet dann an den Kommunikationsknoten EX2 einen Auftrag zur Herstellung der Kommunikationsverbindung CON. Wie bereits beschrieben baut daraufhin der Kommunikationsknoten EX2 die gewünschte Kommunikationsverbindung CON zwischen Endgerät SUB2 und Endgerät SUB1 auf dem Kommunikationsweg CON2A auf. Die dadurch anfallenden Gebühreneinheiten werden dem Kommunikationsknoten EX1 übermittelt, der diese dann einem der beiden Teilnehmer anrechnet.

Neben den jeweils auf einem Kommunikationsweg zu erwartenden Gebühren kann der Kommunikationsknoten EX1 auch die auf dem jeweiligen Kommunikationsweg zu erwartende Übertragungsqualität in die Auswahl des jeweils günstigsten Kommunikationsweges einbeziehen. Dazu kann in der Kommunikationswegtabelle zusätzlich zu den Gebühren für jeden der Kommunikationswege ein Parameter für die Übertragungsqualität eingetragen werden. Wenn dann für einen Teilnehmeranschluß, z.B. für den Teilnehmeranschluß des Endgerätes SUB1, eine gewünschte Mindest-Übertragungsqualität vorgegeben ist, z.B. durch einen Eintrag in dem Speicher MEM, wählt der Kommunikationsknoten EX1 möglicherweise nicht wie in dem obigen Beispiel den Kommunikationsweg CON2A als den geeignetsten Kommunikationsweg für die Kommunikationsverbindung CON aus, sondern den Kommunikationsweg CON2B, weil nur der Kommunikationsweg CON2B die gewünschte Mindest-Übertragungsqualität bietet. Eine gewünschte Mindest-Übertragungsqualität kann dem Kommunikationsknoten EX1 auch bereits zusammen mit dem Anmelden eines Verbindungswunsches angegeben werden. Nachdem wie in dem obigen Beispiel des Verbindungsaufbaus das Endgerät SUB1 mit dem Kommunikationsknoten EX1 über den Verbindungsabschnitt CON1 verbunden ist, kann der Kommunikationsknoten EX1 das Endgerät SUB1 z.B. mit Hilfe einer Sprachansage zur Angabe einer gewünschten Übertragungsqualität auffordern. Das Endgerät SUB1 kann dann dem Kommunikationsknoten EX1 z.B. im Rahmen einer In-Band-Signalisierung mit DTMF-Signalen eine Übertragungsqualität vorgeben. Wird dann z.B. an einem Tastenfeld des Endgerätes SUB1 eine Nummerntaste "1" gedrückt und ein dieser Nummerntaste entsprechendes DTMF-Signal von dem Endgerät SUB1 an den Kommunikationsknoten EX1 übertragen, so kann der Vermittlungsstelle EX11 beispielsweise daraus entnehmen, daß eine sehr gute Übertragungsqualität gewünscht ist. Analog kann der Kommunikationsknoten EX1 z.B. einem einer Nummerntaste "3" entsprechenden DTMF-Signal entnehmen, daß auch eine durchschnittliche Übertragungsqualität genügt. Entsprechend der vorgegebenen Übertragungsqualität baut der Kommunikationsknoten EX1 die Kommunikationsverbindung CON auf.

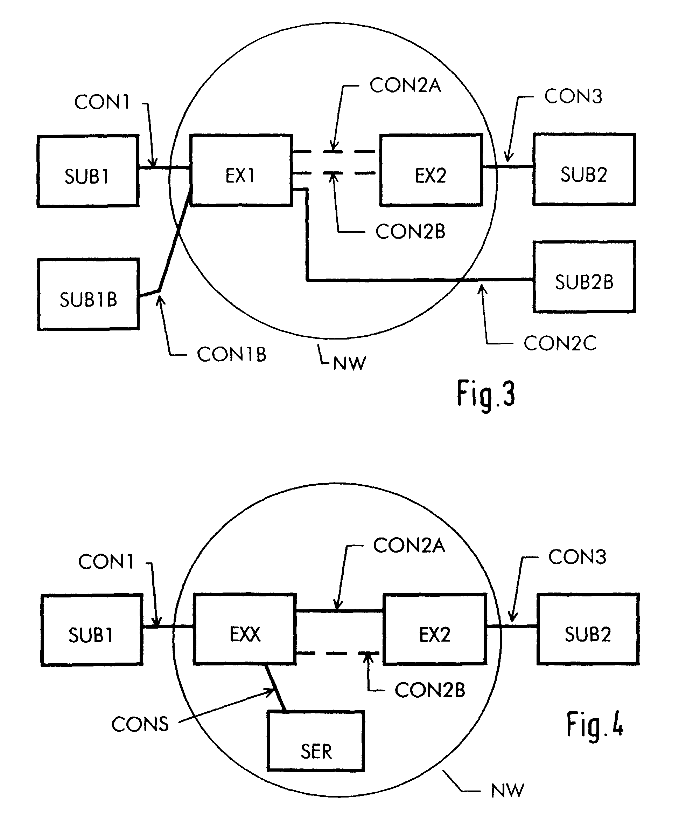

In Figur 3 sind aus Figur 1 bekannte Komponenten dargestellt, die jeweils die aus Figur 1 bekannten Funktionen erfüllen und deshalb in beiden Figuren identische Bezugszeichen tragen. Ergänzend hinzugekommen ist jedoch in Figur 3 ein Endgerät SUB2B, das über einen Kommunikationsweg CON2C von dem Kommunikationsknoten EX1 erreicht werden kann. Außerdem sind in Figur 3 ein Endgerät SUB1 B und ein Verbindungsabschnitt CON1B dargestellt, auf die später noch eingegangen wird. Das Endgerät SUB2B ist durch eine eigene Teilnehmeranschlußleitung mit dem Telekommunikationsnetz NW verbunden, deren Verlauf durch den Kommunikationsweg CON2C angedeutet ist. Das Endgerät SUB2B befindet sich im Besitz desselben Teilnehmers, im folgenden B-Teilnehmer genannt, der auch über das Endgerät SUB2 verfügt. So kann z.B. das Endgerät SUB2 ein Endgerät für ein leitungsgebundenes Telekommunikationsnetz sein und das Endgerät SUB2B ein Endgerät für ein Mobiifunk-Telekommunikationsnetz. Dieser B-Teilnehmer kann also von dem Endgerät SUB1 aus entweder über das Endgerät SUB2 oder das Endgerät SUB2A erreicht werden. Diese alternative Erreichbarkeit des B-Teilnehmers ist in der Kommunikationswegtabelle in der Datenbasis DB des Kommunikationsknotens EX1 vermerkt. Der Kommunikationsweg CON2C kann wie die Kommunikationswege CON2A und CON2B über verschiedene Teilnetze des Telekommunikationsnetzes NW führen, z.B. über ein Mobilfunk-Telekommunikationsnetz, falls das Endgerät SUB2B ein Endgerät für ein Mobilfunk-Telekommunikationsnetz ist. Wenn von dem Endgerät SUB1 bei dem Kommunikationsknoten EX1 ein Verbindungswunsch zu dem Endgerät SUB2 angemeldet wird, so kann der Kommunikationsknoten EX1 zusätzlich zu den auf einem der Kommunikationswege CON2A und CON2B anfallenden Gebühren auch die auf dem Kommunikationsweg CON2C anfallenden Gebühren in die Ermittlung des günstigsten Kommunikationsweges mit einbeziehen. Falls dann die Gebühren auf dem Kommunikationsweg CON2C geringer sind als auf einem der Kommunikationswege CON2A oder CON2B, stellt der Kommunikationsknoten EX1 die gewünschte Verbindung anstatt zu dem Endgerät SUB2 zu dem Endgerät SUB2A her.

Ebenso wie der B-Teilnehmer kann auch der mit dem Endgerät SUB1 anrufende Teilnehmer, im folgenden A-Teilnehmer genannt, über ein weiteres, zu dem Endgerät SUB1 alternatives Endgerät SUB1B verfügen. Das Endgerät SUB1 B ist über eine Teilnehmeranschlußleitung mit dem Telekommunikationsnetz NW verbunden. Der Verlauf dieser Teilnehmeranschlußleitung wird durch den Verbindungsabschnitt CON1B zwischen dem Endgerät SUB1B und dem Kommunikationsknoten EX1 angedeutet. Wie die alternative Erreichbarkeit des B-Teilnehmers über die Endgeräte SUB2 und SUB2B ist auch die alternative Nutzungsmöglichkeit der Endgeräte SUB1 und SUB1B durch den A-Teilnehmer in der Kommunikationswegtabelle in der Datenbasis DB des Kommunikationsknotens EX1 vermerkt. Wenn der A-Teilnehmer von seinem Endgerät SUB1 einen Verbindungswunsch zu dem Endgerät SUB2 bei dem Kommunikationsknoten EX1 anmeldet, kann der Kommunikationsknoten EX1 mit Hilfe seiner Kommunikationswegtabelle unter Betrachtung aller von dem Verbindungswunsch möglicherweise betroffenen Verbindungsabschnitte und Kommunikationswege ermitteln, daß eine alternative Verbindung zwischen den Endgeräten SUB1B und SUB2B zu günstigeren Gebühren möglich ist als die gewünschte Verbindung zwischen den Endgeräten SUB1 und SUB2. Der Kommunikationsknoten EX1 teilt dies dem A-Teilnehmer z.B. durch eine Sprachansage mit, beendet dann die Verbindung auf dem Verbindungsabschnitt CON1 zu dem Endgerät SUB1 und stellt statt der Verbindung zwischen den Endgeräten SUB1 und SUB2 eine Verbindung zwischen den Endgeräten SUB1B und SUB2B her. Die durch die letztere Verbindung wie auch die möglicherweise auf dem Verbindungsabschnitt CON1 zuvor verursachten Gebühren werden in der bereits beschriebenen Weise berechnet und einem oder beiden Teilnehmern belastet.

Wenn der B-Teilnehmer nicht wie in letzterem Beispiel über die alternativen Endgeräte SUB2 und SUB2B verfügt, sondern nur über ein einziges Endgerät SUB2, kann der Kommunikationsknoten EX1 bei einem von dem Endgerät SUB1 ausgehenden Verbindungswunsch zu dem Endgerät SUB2 auch ermitteln, daß der A-Teilnehmer über sein alternatives Endgerät SUB1B mit dem Endgerät SUB2 zu den ingesamt günstigsten Gebühren verbunden werden kann und dann in der bereits beschriebenen Weise eine Verbindung zwischen dem Endgerät SUB1B und dem Endgerät SUB2 herstellen sowie anfallende Gebühren ermitteln und anrechnen.

Anstatt dem erfindungsgemäßen Kommunikationsknoten EX1 kann auch eine in Telekommunikationsnetzen übliche Vermittlungsstelle eingesetzt werden, die mit einem erfindungsgemäßen Server zusammenwirkt. In Figur 4 ist eine solche, als Vermittlungsstelle EXX bezeichnete Vermittlungsstelle dargestellt, die über eine Verbindung CONS mit einem erfindungsgemäßen Server SER verbunden ist. Die übrigen in Figur 4 dargestellten Komponenten sind mit den gleichnamigen aus Figur 1 bekannten Komponenten in ihrer Funktion identisch und brauchen deshalb nicht näher erläutert werden. Die Vermittlungsstelle EXX kann z.B. eine sogenannter SSP (Service Switching Point) und der Server SER ein SCP (Service Control Point) eines Intelligenten Netzes (IN) sein, die über die Verbindung CONS mit Hilfe des bereits erwähnten Zentralen Zeichengabesatzes Nr. 7 der ITU-T miteinander kommunizieren. Der Server SER kann auch ein Rechnerbaustein sein, der in die Vermittlungsstelle EXX integriert ist und über eine interne, proprietäre Schnittstelle mit der Vermittlungsstelle EXX verbunden ist. Wie der Kommunikationsknoten EX11 verfügt auch der Server SER über ein Steuermittel CPU, einen Speicher MEM und eine Datenbasis DB, in der Kommunikationswegtabellen abgelegt sind. In diesen Kommunikationswegtabellen sind die von der Vermittlungsstelle EXX aus nutzbaren Kommunikationswege vermerkt, z.B. in Figur 4 die Kommunikationswege CON2A und CON2B. Wenn von dem Endgerät SUB1 bei der Vermittlungsstelle EXX ein Verbindungswunsch zu dem Endgerät SUB2 angemeldet wird, so gibt die Vermittlungsstelle EXX diesen Verbindungswunsch zunächst an den Server SER weiter. Dieser ermittelt dann den die zu den insgesamt günstigsten Gebühren mögliche Kommunikationsverbindung zwischen den Endgeräten SUB1 und SUB2 und gibt dann je nach Ergebnis der Ermittlung der Vermittlungsstelle EXX mit Hilfe einer Nachricht einen Auftrag, die gewünschte Verbindung entweder über den Kommunikationsweg CON2A oder den Kommunikationsweg CON2B weiter aufzubauen. Die durch die Verbindung zwischen den Endgeräten SUB1 und SUB2 anfallenden Gebühren, die z.B. in Form von Gebührenimpulsen oder Rechnungsnachrichten zu der Vermittlungsstelle EXX gelangen, werden dann von der Vermittlungssteile EXX zu dem Server SER weitergeleitet, von diesem aufgerechnet und einem oder beiden der an der Verbindung beteiligten Teilnehmer in der beschriebenen Weise belastet.

## Patentansprüche

1. Verfahren zum Aufbau gebührenoptimierter Kommunikationsverbindungen durch eine Kommunikationseinrichtung (EX1), mit den Schritten:
- Bereitstellen einer Datenbasis (DB) durch die Kommunikationseinrichtung, in der Gebühren gespeichert sind, die bei der Nutzung von Kommunikationswegen (CON2A, CON2B) anfallen, die von der Kommunikationseinrichtung zum Aufbau einer Kommunikationsverbindung nutzbar sind,
- Anmelden eines Verbindungswunsches bei der Kommunikationseinrichtung durch einen ersten Teilnehmer (SUB1) zu einem zweiten Teilnehmer (SUB2),
- Ermittlung eines (ersten) Kommunikationsweges (CON2A) zwischen dem ersten und dem zweiten Teilnehmer nach den insgesamt günstigsten Gebühren als einem Kriterium,
- Aufbau einer Kommunikationsverbindung zwischen dem ersten und dem zweiten Teilnehmer auf dem besagten (ersten) Kommunikationsweg,
**gekennzeichnet durch** die weiteren Schritte:
- Ermitteln der durch die besagte Kommunikationsverbindung anfallenden Gebühreneinheiten,
- Anrechnen der angefallenen Gebühren mindestens einem der beiden Teilnehmer durch die Kommunikationseinrichtung.

2. Verfahren nach Anspruch 1, dadurch gekennzeichnet, daß ein zweiter kostengünstigerer Kommunikationsweg (CON2B) zwischen dem ersten und dem zweiten Teilnehmer nach den insgesamt günstigsten Gebühren durch die Kommunikationseinrichtung ermittelt wird, wenn sich während der Verbindung die auf den nutzbaren Kommunikationswegen jeweils anfallenden Gebühren ändern.

3. Verfahren nach Anspruch 2, dadurch gekennzeichnet, daß die Möglichkeit der Nutzung des zweiten Kommunikationsweges zumindest einem der beiden Teilnehmer angezeigt wird.

4. Verfahren nach Anspruch 2, dadurch gekennzeichnet, daß auf den zweiten Kommunikationsweg umgeschaltet wird.

5. Verfahren nach Anspruch 3, dadurch gekennzeichnet, daß auf den zweiten Kommunikationsweg (CON2B) umgeschaltet wird, wenn der erste oder der zweite Teilnehmer durch Zeichengabe einen Auftrag zu dem Umschalten auf den zweiten Kommunikationsweg gibt.

6. Verfahren nach Anspruch 1, dadurch gekennzeichnet, daß in der Datenbasis der Kommunikationseinrichtung zusätzlich zu den Gebühren auch die jeweilige Übertragungsqualität der Kommunikationswege gespeichert wird, die von der Kommunikationseinrichtung zum Aufbau einer Kommunikationsverbindung nutzbar sind, daß für den Verbindungswunsch eine gewünschte Übertragungsqualität des Verbindungswunsches vorgegeben wird und daß der erste Kommunikationsweg zwischen dem ersten und dem zweiten Teilnehmer zusätzlich zu dem Kriterium der insgesamt günstigsten Gebühren auch nach dem Kriterium der gewünschten Übertragungsqualität ermittelt wird.

7. Verfahren nach Anspruch 1, dadurch gekennzeichnet, daß dann, wenn der erste oder der zweite Teilnehmer über Kommunikationswege erreichbar ist, die zu unterschiedlichen Endgeräten führen, durch die Kommunikationseinrichtung derjenige Kommunikationsweg zwischen denjenigen der Endgeräte ermittelt wird, mit denen der erste und der zweite Teilnehmer zu den insgesamt günstigsten Gebühren verbunden werden kann.

8. Server (SER) zum Aufbau gebührenoptimierter Kommunikationsverbindungen, wobei der Server eine Datenbasis aufweist, in der Gebühren gespeichert sind, die bei der Nutzung von Kommunikationswegen (CON2A, CON2B) anfallen, die von mindestens einem Kommunikationsknoten (EXX) aus zum Aufbau einer Kommunikationsverbindung nutzbar sind, wobei der Server Mittel aufweist, die so aufgebaut sind, daß ein erster Teilnehmer (SUB1) einen Verbindungswunsch zu einem zweiten Teilnehmer (SUB2) anmelden kann, wobei der Server Mittel aufweist, um einen (ersten) Kommunikationsweg (CON2A) zwischen dem ersten und dem zweiten Teilnehmer nach den insgesamt günstigsten Gebühren als einem Kriterium zu ermitteln und wobei der Server Mittel aufweist, um einen Auftrag zum Aufbau einer Kommunikationsverbindung zwischen dem ersten und dem zweiten Teilnehmer auf dem besagten (ersten) Kommunikationsweg zu geben, dadurch gekennzeichnet, daß der Server Mittel aufweist, um die durch die besagte Kommunikationsverbindung anfallenden Gebühreneinheiten zu ermitteln und daß der Server Mittel aufweist, um die angefallenen Gebühren mindestens einem der beiden Teilnehmer anzurechnen.

9. Kommunikationsknoten (EX1) zum Aufbau gebührenoptimierter Kommunikationsverbindungen, wobei der Kommunikationsknoten eine Datenbasis (DB) aufweist, in der Gebühren gespeichert sind, die bei der Nutzung von Kommunikationswegen (CON2A, CON2B) anfallen, die von dem Kommunikafionsknoten zum Aufbau einer Kommunikationsverbindung nutzbar sind, wobei der Kommunikationsknoten Mittel aufweist, bei denen ein erster Teilnehmer (SUB1) einen Verbindungswunsch zu einem zweiten Teilnehmer (SUB2) anmelden kann, wobei der Kommunikationsknoten Mittel aufweist, um einen (ersten) Kommunikationsweg (CON2A) zwischen dem ersten und dem zweiten Teilnehmer nach den insgesamt günstigsten Gebühren als einem Kriterium zu ermitteln und wobei der Kommunikationsknoten Mittel aufweist, um eine Kommunikationsverbindung zwischen dem ersten und dem zweiten Teilnehmer auf dem besagten (ersten) Kommunikationsweg aufzubauen, **dadurch gekennzeichnet, daß** der Kommunikationsknoten Mittel aufweist, um die durch die besagte Kommunikationsverbindung anfallenden Gebühreneinheiten zu ermitteln und daß der Kommunikationsknoten Mittel aufweist, um die angefallenen Gebühren mindestens einem der beiden Teilnehmer anzurechnen.

10. Kommunikationsknoten nach Anspruch 9, dadurch gekennzeichnet, daß der Kommunikationsknoten Mittel zum Senden und Mittel zum Empfangen von Nachrichten auf zumindest einem Signalisierungskanal enthält, auf dem Nachrichten mit einem zwischen Vermittlungsstellen eines Telekommunikationsnetzes üblichen Zeichengabesatz ausgetauscht werden.
